# EUROPÄISCHE PATENTSCHRIFT

(11) **EP 1 663 051 B1**
(45) Veröffentlichungstag und Bekanntmachung des Hinweises auf die Patenterteilung: **29.05.2013**
(21) Anmeldenummer: 04786792.4
(22) Anmeldetag: 15.09.2004
(51) Int. Cl.: A61C 8/00

(54) **POSITIONIERSCHRAUBE ZUR ANFERTIGUNG VON ZAHNERSATZ BEI UNBEZAHNTEM ODER TEILBEZAHNTEM KIEFER**
POSITIONING SCREW FOR THE PRODUCTION OF A SET OF DENTURES FOR AN UNTOOTHED OR PARTIALLY TOOTHED JAW
VIS DE POSITIONNEMENT POUR PRODUIRE UNE PROTHESE DENTAIRE POUR UNE MACHOIRE PARTIELLEMENT OU COMPLETEMENT DEPOURVUE DE DENTS

(30) Priorität: 16.09.2003 DE 10342656
(43) Veröffentlichungstag der Anmeldung: 07.06.2006
(73) Patentinhaber: Bredent Dentalgeräte und Materialien Fach- und Organisationsberatung Peter Brehm, 89250 Senden (DE)
(72) Erfinder: WICHMANN, Manfred, 91080 Langensendelbach (DE); BERGLER, Michael, 91056 Erlangen (DE); HOLST, Stefan, 90419 Nürnberg (DE)
(74) Vertreter: Dziewior, Joachim
(86) Internationale Anmeldenummer: PCT/DE2004/002073
(87) Internationale Veröffentlichungsnummer: WO 2005/027772

(56) Entgegenhaltungen:
- EP-A- 1 108 398
- WO-A-01/47429
- DE-A- 4 326 841
- US-A- 3 732 621

## Beschreibung

Schraube zur Verwendung als Positionierschraube für ein verfahren zur Anfertigung von Zahnersatz bei unbezahntem oder teilbezahntem Kiefer.

Die Erfindung betrifft eine Schraube zur Verwendung als Positionierschraube für ein Verfahren zur Anfertigung von Zahnersatz bei unbezahntem oder teilbezahntem Kiefer.

Die Implantatversorgung im zahnmedizinischen Bereich gewinnt immer mehr an Bedeutung. Durch das große Behandlungsspektrum und neue Materialien in Kombination mit positiven Langzeitstudien und technischen Neuerungen ist ein deutlicher Trend zu veränderten Behandlungsprotokollen zu erkennen. Während das traditionelle Konzept der Implantatversorgungen eine belastungsfreie Einheilperiode vorsieht, verändert sich das Indikationsspektrum vermehrt zu sofortbelastungen der Implantate über Langzeitprovisorien. Gleichzeitig werden durch neue Software-Programme - in Verbindung mit Röntgendiagnostik - Behandlungsplanungen in der Zukunft vermehrt am PC durchgeführt.

Problematisch bei diesen Verfahren ist z.Zt. noch die exakte Umsetzung der Planung in der Mundhöhle. Aufgrund notwendiger Behandlungsschritte (Extraktionen, Freilegung des Knochens, etc.) ist in einer großen Zahl der Fälle eine exakte Repositionierung der zur Diagnostik und Implantation verwendeten sog. Bohrschablonen nicht möglich.

Mit Hilfe von Röntgenschablonen wird das vorhandene Knochenangebot des Patienten gemessen und aufgrund der Diagnostik ein Behandlungsplan erstellt. Entsprechend dem Behandlungsplan werden Bohrschablonen angefertigt. Diese dienen dem Behandler/Operateur zur exakten Positionierung der Implantate während der Operation - entsprechend der präimplantologischen Diagnostik.

Eine exakte Positionierung der Implantate ist vor allem dann wichtig, wenn
- keine Restbezahnung mehr vorhanden ist
- bei Patienten ein reduziertes Knochenangebot vorliegt und die Implantate exakt in die noch vorhandenen Knochenstrukturen inseriert bzw. positioniert werden müssen
- im Bereich der Frontzähne implantiert wird
- bereits vor Implantation ein festsitzendes Langzeitprovisorium erstellt wird, welches unmittelbar nach erfolgter OP eingegliedert werden muss
- bei Tumorpatienten mit rekonstruiertem Knochen.

Bohrschablonen werden bei vorhandener Restbezahnung des Patienten möglichst auf dieser abgestützt. Ist keine Restbezahnung mehr vorhanden, so werden die Schablonen direkt auf der Schleimhaut gelagert. Eine definierte Lagestabilität ist hierbei nicht mehr gegeben.

Aus der DE 43 26 841 ist ein Implantatbausatz bekannt geworden, der aus einem Implantat, einer Einheilschraube sowie einer Aufbauschraube besteht. Die Aufbauschraube trägt dabei einen Kugelkopf für das Aufbauteil. Weiter beschreibt die WO 01/47429 einen Implantatkörper mit einem Ankerteil, das einen Kopf für den aufzusetzenden Zahnersatz aufweist.

Der Erfindung liegt zunächst die Aufgabe zugrunde, eine Schraube als Positionierschraube dahingehend zu verbessern, daß eine sowohl schnellere - auch provisorische - Versorgung des Patienten als auch eine vereinfachte und genauere Anpassung und Anfertigung des Zahnersatzes erreicht wird.

Diese der Erfindung zugrunde liegende Aufgabe wird durch eine Schraube zur Verwendung als Positionierschraube nach dem voranstehend beschriebenen Verfahren gelöst durch ein gewindetragendes Vorderteil, Angriffsflächen zum Ansetzen eines Eindrehwerkzeugs und eine Anlagefläche für die zu positionierenden Schablonen und Teile, wobei die Angriffsflächen von einem Sechskant und die Anlagefläche von einem Kugelkopf gebildet sind, und wobei der Kugelkopf einen kleineren Durchmesser als der Sechskant aufweist und eine Anlagefläche für das Eindrehwerkzeug bildet.

Bei der Erfindung handelt es sich um eine Schraube, die aus einem körperverträglichen Material besteht und temporär im Knochen verankert wird. Die Insertion und Entfernung erfolgt transgingival (durch die Schleimhaut), ohne vorherige Inzision der Schleimhaut.

Die durch die Erfindung erreichten Vorteile bestehen zunächst darin, daß die ermöglichte Positionierung während jedes einzelnen Behandlungsschrittes exakt die gleiche ist. Damit ist auch bei sich ändernden Situationen in der Mundhöhle (beispielsweise Extraktionen, Freipräparation des Knochens) die im Vorfeld der Behandlung durchgeführte Planung exakt reproduzierbar/umsetzbar. Im Ergebnis läßt sich auf diese Weise ein hochwertiges Provisorium innerhalb nur eines Tages schaffen, was insbesondere für Patienten, die im öffentlichen Leben stehen, von besonderer Bedeutung sein kann.

Die Wahl der Anordnung der Positionierschraube wird nur durch anatomische Gegebenheiten begrenzt.

Durch geeignete Gestaltung der Positionierschraube ist eine Verwendung auch in komplexen und auf konventionellem Wege schwer umzusetzenden Behandlungssituationen gegeben (Tumorrekonstruktionen).

Die Kombination einer exakten Positionierung mit weiterführenden diagnostischen Untersuchungsmethoden kann ebenfalls durch die Benutzung optimiert werden (u.a. 3-dimensionalen Behandlungsplanungen, CT-Schablonen, computererrechnete Implantatpositionierung).

Um den üblicherweise zu erwartenden Ungenauigkeiten entgegen zu wirken, sollen die Positionierschrauben als temporäre Pfeiler dienen, auf denen Röntgen- und Bohrschablonen in jeder Behandlungssitzung exakt gleich positioniert werden können.

Die Schrauben können ähnlich einer sog. "Drill-Free"-Schraube ausgebildet sein, die an beliebiger Stelle in den maxillären/mandibulären Knochen eingebracht werden können. Drill-Free-Schrauben stellen eine Weiterentwicklung herkömmlicher selbstschneidender Osteosyntheseschrauben dar, die sich "selbstbohrend" ohne Inanspruchnahme einer vorhergehenden maschinellen Pilotbohrung manuell in Knochen eindrehen lassen. Beide Schraubenarten können bei der exfindungsgemäßen Positionierschraube angewendet werden. Ob die Pilotbohrung oder die "Drill-free Schraube" verwendet werden, ist von der Präferenz des Behandlers und Lokalisation in der Mundhöhle abhängig. Nachteile einer Vorbohrung liegen einerseits in dem zusätzlichen Arbeitssehritt und andererseits ist die Retention herkömmlicher Schrauben durch die Bohrung verringert.

Bei der klinischen Anwendung der Drill-Free Schrauben wird in der Literatur die Verwendung im Bereich des zentralen Mittelgesichts uneingeschränkt empfohlen. Im Oberkiefer sind in der Regel dünne Kortikalisschichten anzutreffen, die eine Insertion von Drill-Free-Schrauben erleichtern. Mit zunehmender Kortikalisdicke steigt der Kraftaufwand, der zum Eindrehen der von Schrauben notwendig ist, und zugleich steigt auch die Komplikationshäufigkeit. Im lateralen Mittelgesicht im Unterkieferparamedian- und korpusbereichs ist die Insertion von Drill-Free-Schrauben noch möglich. Im Bereich des Unterkieferwinkels ist die Anwendung von Drill-Fxee-Schrauben bei erwachsenen Patienten über enorale Zugänge kontraindiziert, da hier eine Insertion aufgrund der dicken Kortikalis entweder primär misslingt oder nur unvollständig möglich ist.

Zweckmäßigerweise ist bei der Schraube zwischen dem gewindetragenden Vorderteil und den Angriffsflächen ein gewindeloses Schaftteil angeordnet.

Der Sechskant der Schraube dient dabei als Schraubenkopf für den Schraubeneinbringer bzw. -entferner und zugleich als Eindrehstop bei der Insertion in den Knochen.

Die Kugel gewährleistet eine gemeinsame Einschubrichtung bei Verwendung mehrerer Schrauben in unterschiedlichen axialen Ausrichtungen; ferner dient sie als Übertragungspunkt zur Umsetzung auf das Gipsmodell. Darüberhinaus hat der Kugelkopf beim Einbringen der Schraube in den Knochen eine stabilisierende Wirkung. Grundsätzlich dient der Kugelkopf als Patritze für jegliche Art von Schnapp-Attachments.

Schließlich besteht noch die vorteilhafte Möglichkeit, daß die Schraube zweiteilig ausgebildet ist, wobei der Kugelkopf lösbar, beispielsweise einschraubbar, mit dem Schaftteil verbunden ist.

Im folgenden wird die Erfindung an Hand eines in der Zeichnung dargestellten Ausführungsbeispiels näher erläutert; es zeigen:
- Fig. 1: die Positionierschraube nach der Erfindung in drei Ausgestaltungen, jeweils in Draufsicht,
- Fig. 2: ein Kiefermodell mit eingesetzten Positionierschrauben in Draufsicht,
- Fig. 3: ein Kiefermodell mit eingesetzten Positionierschrauben im Querschnitt,
- Fig. 4: ein Kiefermodell mit mit einer auf die Positionierschrauben aufgesetzten Bohrschablone.

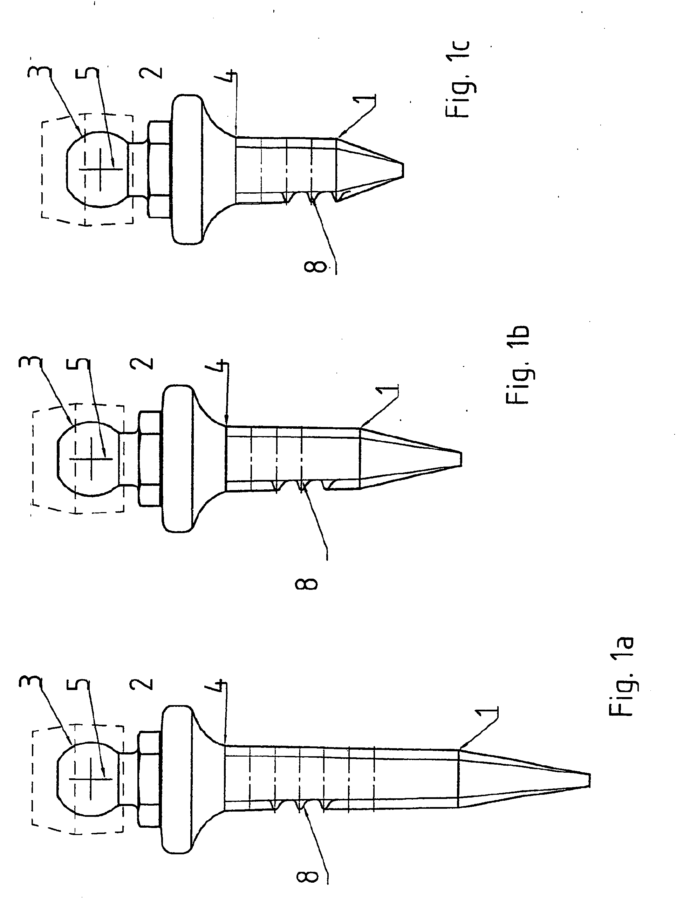

Die in Zeichnung in Fig. 1 dargestellte Schraube, im folgenden Positionierschraube 8 genannt, wird eingesetzt bei einem Verfahren, das der Anfertigung von Zahnersatz bei unbezahntem oder teilbezahntem Kiefer im Rahmen einer zahnmedizinischen bzw. zahntechnischen Versorgung von Patienten dient. Es kommt insbesondere zur Anwendung, wenn auf neu zu setzenden Implantaten Zahnersatz aufzubauen ist.

Hierbei werden zunächst im lingual-oralen bzw. palatinalen Bereich und/oder auf dem Kieferkamm die mit einem Aufsatzelement versehenen Positionierschrauben 8 eingedreht. Sodann erfolgt ein die Positionierschrauben einbeziehender, die Ist-Situation des Patientenkiefers erfassender Abdruck 6. Anschließend werden entsprechende Positionierschrauben 8 in den Abdruck 6 eingesetzt, so daß schließlich die weiteren zahntechnischen Arbeiten am Abdruck 6, also die Anfertigung einer Bohrschablone 7 für die zu setzenden Implantate und/oder die Anfertigung einer Übertragungsschablone vorgenommen werden können.

In gleicher Weise erfolgt die Durchführung der zahnmedizinischen Arbeiten im Mund des Patienten, also die Anwendung der Bohrschablone 7 zum Setzen der Implantate und/oder das Verblocken der Abdruckpfosten der Implantate mit der Übertragungsschablone jeweils durch Fixierung an den Positionierschrauben 8 im Abdruck 6 bzw. im Kiefer. Durch die gleiche Anordnung der Positionierschrauben 8 im Kiefer wie am Modell wird eine paßgenaue Arbeit sichergestellt.

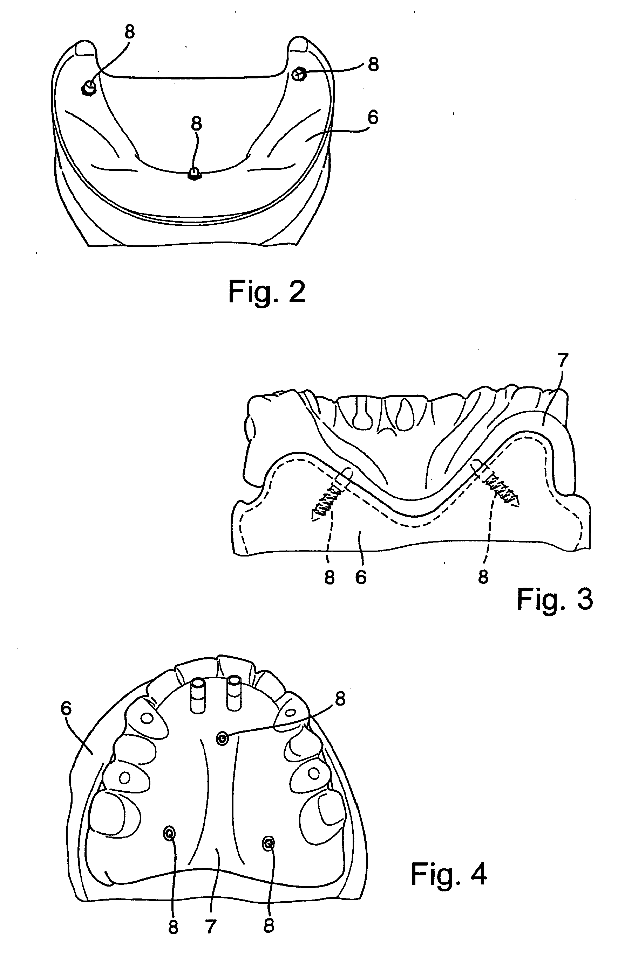

Wie sich aus der Fig. 2 ergibt, werden je Kiefer wenigstens drei Positionierschrauben 8 eingesetzt. Die Positionierschraube 8 nach Fig. la kann dabei mit einer Pilotbohrung, die in Fig. 1b dargestellte dagegen selbstbohrend in den Knochen eingedreht werden, so daß dann auf eine Pilotbohrung verzichtet werden kann.

Wie sich der Fig. 1 im einzelnen entnehmen läßt, weist die Positionierschraube 8 ein gewindetragendes Vorderteil 1, ferner Angriffsflächen 2 zum Ansetzen eines Eindrehwerkzeugs sowie eine Anlagefläche 3 für die zu positionierenden Schablonen und Teile auf. Zwischen dem gewindetragenden Vorderteil 1 und den Angriffsflächen 2 ist ein gewindeloses Schaftteil 4 angeordnet ist.

Die Angriffsflächen 2 sind von einem Sechskant und die Anlagefläche 3 von einem Kugelkopf 5 gebildet, wobei der Kugelkopf 5 einen kleineren Durchmesser als der Sechskant aufweist.

Die Stabilität der Positionierschrauben 8 im Knochen beruht auf den Gesetzen der schiefen Ebene; der Schraubengang entsteht dabei durch Aufwickeln der schiefen Ebene auf einen Zylinder. Durch die Steigung des Gewindes ist die Stabilität der Schrauben gewährleistet.

Der Eindrehstopp verhindert eine zu tiefe Insertion in den Knochen. Gleichzeitig dient er als Schraubenkopf für den Einbringschrauber zur Insertion in den Knochen und zu späterer Entfernung.

Da die Schraube nur temporär in den Kieferknochen inseriert wird ist ausschließlich eine primäre Stabilität das Ziel. Eine Osseointegration, wie sie bei konventionellen Implantaten primäres Ziel ist, ist nicht notwendig.

Die Entfernung der Schrauben kann in der gleichen Sitzung nach Insertion der Implantate erfolgen. Bei Bedarf können die Schrauben aber auch länger in situ verbleiben, sollten weitere Maßnahmen mit ihrer Hilfe durchgeführt werden.

Der Schraubenkopf besteht aus einer Kugel, die auf dem Eindrehstopp sitzt. Die Dimensionierung dieses Kugelkopfes ist etwas geringer als der Durchmesser des Eindrehstopps. Hierdurch ist ein Umgreifen der Kugel durch den Einbringschrauber gewährleistet. Gleichzeitig wird dieser durch die Anlagerung der Innenfläche an die Außenfläche der Kugel beim Einbringen der Schraube stabilisiert.

Ein weiterer Grund für den Kugelkopf 5 ist, dass bei Verwendung mehrerer Schrauben eine beliebige Positionierung/Angulation im Kiefer ermöglich ist und trotzdem eine einheitliche Einschubrichtung für die zu verankernden Hilfsmittel erreicht werden kann (siehe Fig. 2 und 3).

Der Durchmesser der Kugel und der Einbringstopp sind so gewählt, dass der Kugelkopf 5 nicht unter die Schleimhaut versenkt wird. Durch das Kugeldesign wird gewährleistet, dass es hierbei zu keiner Reizung der oralen Strukturen während der Verankerungsperiode im Knochen kommen kann. Von großem Vorteil für den Patienten ist, dass Freilegungsoperationen zur Entfernung der Schrauben entfallen (siehe Fig. 2 und 3).

Die erfindungsgemäßen Schrauben entsprechen in ihren Ausmaßen in etwa den in der Frakturheilung verwendeten Mini-/Mikro-Osteosyntheseschrauben. Diese Osteosyntheseschrauben dienen zur Stabilisierung von Frakturfragmenten in grazilen anatomischen Strukturen. Durch die geringe Dimensionierung können diese Schrauben sowohl vertikal, als auch horizontal in den Kieferkamm, in die zentrale Gaumennaht oder in distale Kieferbereiche inseriert werden.

Da die Kugelkopf-Minischrauben direkt transgingival (ohne Aufklappung der Schleimhaut) inseriert werden, ist der Behandlungsaufwand für den Operateur und den Patienten minimal. Die Insertion kann in wenigen Minuten mit lokaler Anästhesie, wie sie bei konventionellen zahnmedizinischen Behandlungen eingesetzt wird, erfolgen.

Als Nachteile der bisher eingesetzten temporären Implantate sind die hohen Kosten für den Patienten und die Tatsache zu nennen, dass sie keinen Kugelkopf 5 besitzen, sondern Aufbaupfosten. Hieraus ergibt sich die Notwendigkeit einer ausschließlich vertikalen Insertion in den Kieferknochen, wodurch wiederum das Platzangebot für die definitiven Implantate erheblich eingeschränkt wird.

Insgesamt kann für die "Übergangsimplantate" festgehalten werden, dass Sie für die Versorgung mit Langzeitprovisorien konzipiert sind und aufgrund des erheblichen Behandlungsaufwandes nicht zur temporären Stabilisierung von Schablonen verwendet werden können.

Es gibt diverse Arbeitsgruppen im Bereich der Implantologie, die mit Hilfe von "Legosteinen" versuchen, Röntgenschablonen für CT's definiert zu positionieren. Diese Arten der Stabilisierung sind jedoch extrem zeitaufwendig in Bezug auf die Herstellung und Insertion, sowohl für den Behandler, als auch den Patienten. Auch hier bietet die Kugelkopfschraube deutliche Vorteile, da sie sehr schnell inseriert und vom Behandler in gleicher Sitzung mit beliebigen, in der Praxis verwendeten Materialien abgeformt werden kann.

Die Insertion der entwickelten Schraube ist unabhängig von den anatomischen Gegebenheiten und vermeidet zusätzliche Kosten durch aufwendige labortechnische Arbeitsschritte.

Die Arbeitsschritte, die für eine Schablone mit den neu entwickelten Kugelkopfschrauben notwendig sind, sind mit Ausnahme der Einpolymerisation der Matrizen in die Bohrschablone 7 die gleichen wie bei der Herstellung einer konventionellen Bohrschablone 7. Durch die mögliche Präzision und die einfache Handhabung ist die Erfindung somit für jeden implantologisch tätigen Zahnarzt von enormem Nutzen, bei minimalem Zeitaufwand und geringem finanziellen Mehraufwand für den Patienten.

## Patentansprüche

1. Schraube zur Verwendung als Positionierschraube (8) für ein Verfahren zur Anfertigung von Zahnersatz, aufweisend ein gewindetragendes Vorderteil, Angriffsflächen (2) zum Ansetzen eines Eindrehwerkzeugs und eine Anlagefläche (3) für die zu positionierenden Schablonen und Teile, wobei die Angriffsflächen (2) von einem sechskant und die Anlagefläche (3) von einem Kugelkopf (5) gebildet sind, **dadurch gekennzeichnet, daß** der Kugelkopf (5) einen kleineren Durchmesser als der Sechskant aufweist und eine Anlagefläche für das Eindrehwerkzeug bildet.

2. Schraube nach Anspruch 1, **dadurch gekennzeichnet, daß** zwischen dem gewindetragenden Vorderteil (1) und den Angriffsflächen ein gewindeloses Schaftteil (4) angeordnet ist.

3. Schraube nach Anspruch 1 oder 2, **dadurch gekennzeichnet, daß** sie zweiteilig ausgebildet ist, wobei der Kugelkopf (5) lösbar, beispielsweise einschraubbar, mit dem Schaftteil (4) verbunden ist.

## Claims

1. A screw for use as a positioning screw (8) for a method of producing a tooth prosthesis comprising a threaded front portion, engagement surfaces (2) for the fitment of a screwing-in tool and a contact surface (3) for the parts and templates to be positioned, wherein the engagement surfaces (2) are formed by a hexagon and the contact surface (3) by a ball head (5), **characterised in that** the ball head (5) is of a smaller diameter than the hexagon and forms a contact surface for the screwing-in tool.

2. A screw according to claim 1 **characterised in that** a thread-less shank portion (4) is arranged between the threaded front portion (1) and the engagement surfaces.

3. A screw according to claim 1 or claim 2 **characterised in that** it is of a two-part configuration, wherein the ball head (5) is connected to the shank portion (4) releasably, for example by being screwable thereinto.

## Revendications

1. Vis à utiliser comme vis de positionnement (8) pour un procédé de production d'une prothèse dentaire, présentant une partie avant filetée, des surfaces d'attaque (2) pour le placement d'un outil de vissage et une surface d'appui (3) pour les gabarits et pièces à positionner, les surfaces d'attaque (2) étant formées par un six pans et la surface d'appui (3) par une tête sphérique (5), **caractérisée en ce que** la tête sphérique (5) présente un plus petit diamètre que le six pans et forme une surface d'appui pour l'outil de vissage.

2. Vis selon la revendication 1, **caractérisée en ce qu'**une partie manche sans filetage (4) est prévue entre la partie avant filetée (1) et les surfaces d'attaque.

3. Vis suivant la revendication 1 ou 2, **caractérisée en ce qu'**elle est formée en deux parties, la tête sphérique (5) étant reliée de manière amovible, par exemple vissable, à la partie manche (4).
